**Europäisches Patentamt**

**European Patent Office**

**Office européen des brevets**

(19)

(11) Veröffentlichungsnummer: **0 136 264**
A2

(12) ## EUROPÄISCHE PATENTANMELDUNG

(21) Anmeldenummer: **84810432.9**

(22) Anmeldetag: **04.09.84**

(51) Int. Cl.⁴: **B 61 D 17/04,** B 62 D 33/04, B 62 D 27/06, B 62 D 31/02, B 62 D 27/02, B 62 D 29/00

(30) Priorität: **15.09.83 CH 5023/83**

(43) Veröffentlichungstag der Anmeldung: **03.04.85** **Patentblatt 85/14**

(84) Benannte Vertragsstaaten: **AT BE CH DE FR GB IT LI LU NL SE**

(71) Anmelder: **SCHWEIZERISCHE ALUMINIUM AG, CH-3965 Chippis (CH)**

(72) Erfinder: **Röllin, Ulrich, Am Sutteracher 31, CH-8048 Zürich (CH)**

(54) **Gerippe für einen Wagenkasten.**

(57) Bei einem Gerippe für einen Wagenkasten, insbesondere für Strassen- oder Schienenfahrzeuge zur Personen- und Güterbeförderung sind Profilstäbe (2) od. dgl. über vorstehende oder versenkte Eckverbindungsstücke (3) miteinander verbunden. Die Profilstäbe weisen Längsnuten (8) mit an beiden Seiten ihres Querschnitts vorgesehenen Hinterschneidungen auf, in die ein Klemmstück (12) eingesetzt ist. Dieses Klemmstück (12) ist mit einer Zahnung (18) versehen, mit welcher es beim Festlegen des Eckverbindungsstückes (3) der Nut (8) anliegt.

Gerippe für einen Wagenkasten

---

Die Erfindung betrifft ein Geripppe für einen Wagenkasten insbesondere für Strassen- oder Schienenfahrzeuge zur Personen- und Güterbeförderung mit über Eckverbindungsstücke miteinander verbundenen Profilstäben od.dgl., welche Längsnuten mit ggf. an beiden Seiten ihres Querschnitts vorgesehenen Hinterschneidungen aufweisen, in die ein Klemmstück eingesetzt ist.

Eine derartige Wagenkastenkonstruktion ist beispielsweise aus der DE-OS 27 51 753 bekannt. Dabei handelt es sich im wesentlichen um ein Eckverbindungsstück, welches federartige Anformungen aufweist. Mit diesen federartigen Anformungen greift es in entsprechende Nuten in den Profilstäben ein, wobei sowohl die federartigen Anformungen als auch die Nuten mit abgeschrägten Flächen aneinanderliegen und so eine genügende Formschlüssigkeit erzeugt wird.

Das Klemmstück ist in der genannten DE-OS 27 51 753 als ein Parallelogramm ausgebildet und mit einer Gewindebohrung versehen. Es kann zusammen mit dem Eckstück den Profilstäben angelegt und in die Nut eingesetzt werden. Sobald das Verschrauben beginnt, dreht sich das Klemmstück um etwa 90° und verkeilt sich mit den Nutinnenwänden. Nachteilig hat sich bei diesen Klemmstücken ausgewirkt, dass sie in begrenztem Umfang eine Längsverschiebung eines festzulegenden Profilstabes zulassen. Dies insbesondere dann, wenn die Klemmstücke nicht fest angezogen werden, so dass die Klemm-/Reibungsverbindung nicht ausreicht.

Der Erfinder hat sich zum Ziel gesetzt, ein Gerippe der obengenannten Art zu entwickeln, welches nach wie vor aus Profilstäben besteht, die durch ein Eckverbindungsstück mit dem Klemmstück verbunden sind, wobei jedoch die Wirkung des Klemmstücks verbessert werden soll. Dabei soll aber das Eckverbindungsstück nicht nur vorstehend, sondern als Variante auch in den Profilstäben versenkt angeordnet sein.

Zur Lösung der Aufgabe führt, dass das Klemmstück mit einer Zahnung versehen ist, mit welcher es beim Festlegen des Eckverbindungsstückes der Nut anliegt.

Auf diese Weise krallt sich gewissermassen das Klemmstück in die Nutinnenwand und erzeugt so eine zusätzliche mechanische Verbindung.

Ist erfindungsgemäss vorgesehen, dass die Nut Hinterschneidungen aufweist, so soll die Zahnung so angeordnet sein, dass sie die Hinterschneidungen formschlüssig übergreift. Auf diese Weise wird zusätzlich zu der Klemm-/Reibungsverbindung eine mechanische, formschlüssige Verbindung hergestellt, welche lediglich bei ganz extremen Belastungsfällen noch zusätzlich durch Schweissen oder Kleben fixiert werden muss.

Diese Zahnung kann natürlich auch bei einem Klemmstück in der Form, wie es in der DE-OS 27 51 753 beschrieben ist, vorgesehen werden. Hier bewirkt die Zahnung insbesondere, dass sich das als Parallelogramm ausgebildete Klemmstück nicht nur mit seinen kurzen Kanten gegen die Nutinnenwände abstützt, sondern dass auch die Hinterschneidung der Nut in die Zahnung eingreift. Damit wird das Klemmstück unabhängig von seiner Grösse für solche Profilstäbe anwendbar, bei welchen der lichte Nutinnenquerschnitt grösser ist als die grössere Diagonale des parallelogrammartigen Klemmstücks.

Aus Korrosionsgründen oder Gründen der geforderten Oberflächeneigenschaft für eine nachfolgende Lackierbehandlung od.dgl. kann das Klemmstück aus dem gleichen Werkstoff hergestellt sein, wie die Profile und das Eckverbindungsstück. Für die Uebertragung von grösseren Kräften -- insbesondere in Profillängsrichtung -- ist es dagegen empfehlenswert, das Klemmstück aus einem härteren Werkstoff anzufertigen. Meist kann es jedoch auch genügen, lediglich die Zahnung aus einem härteren Werkstoff herzustellen und diese dann auf das Klemmstück aufzubringen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in

Fig. 1    eine perspektivische Ansicht eines Ausschnitts aus einem Wagenkasten mit einem vorstehenden Eckverbindungsstück;

Fig. 2    eine vergrösserte Seitenansicht des Ausschnitts nach Fig. 1;

Fig. 3    eine Draufsicht in Pfeilrichtung 33 auf den Ausschnitt nach Fig. 1;

Fig. 4    eine perspektivische Ansicht eines Ausschnittes aus einem Wagenkasten mit einem versenkten Eckverbindungsstück;

Fig. 5    eine vergrösserte Seitenansicht des Ausschnittes nach Fig. 4;

Fig. 6    eine Draufsicht in Pfeilrichtung 36 auf den
          Ausschnitt nach Fig. 4;

Fig. 7    eine Seitenansicht eines Klemmstücks mit
          Gewindebohrung in Pfeilrichtung 36 in Fig. 5;

Fig. 8    eine Draufsicht auf das Klemmstück;

Fig. 9    eine weitere Seitenansicht des Klemmstücks in
          Pfeilrichtung 36 in Fig. 5.

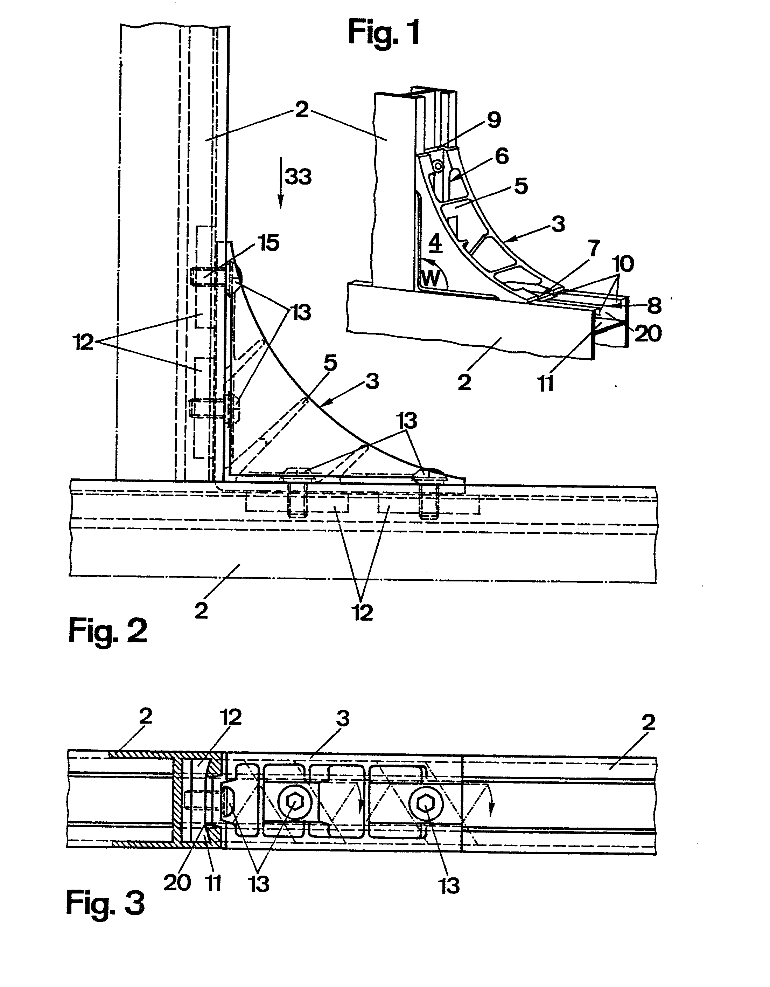

Ein nicht näher dargestellter Fahrzeugaufbau weist ein Gerippe oder ein Gestell auf, welches im wesentlichen aus
vertikal und horizontal angeordneten Profilstäben 2 besteht. Zu deren Festlegung sind insbesondere an stark beanspruchten Stellen Eckverbindungsstücke 3 bzw. 3a vorgesehen. Dabei weisen die Eckverbindungsstücke 3 nach den Figuren 1 - 3 zwei Seitenflächen 4 auf, welche miteinander über
Rippen 5 sowie eine Rücken- 6 und eine Bodenfläche 7 verbunden sind. Die Seitenflächen 4 haben etwa die Form eines
rechtwinkligen Dreiecks, wobei sich der rechte Winkel w an
der Verbindungsstelle der Profilstäbe 2 befindet.

Die Profilstäbe oder Spriegel 2 sind mit Nuten 8 versehen,
in welche den Eckverbindungsstücken 3 angeformte Federn 9
eingesetzt werden können.

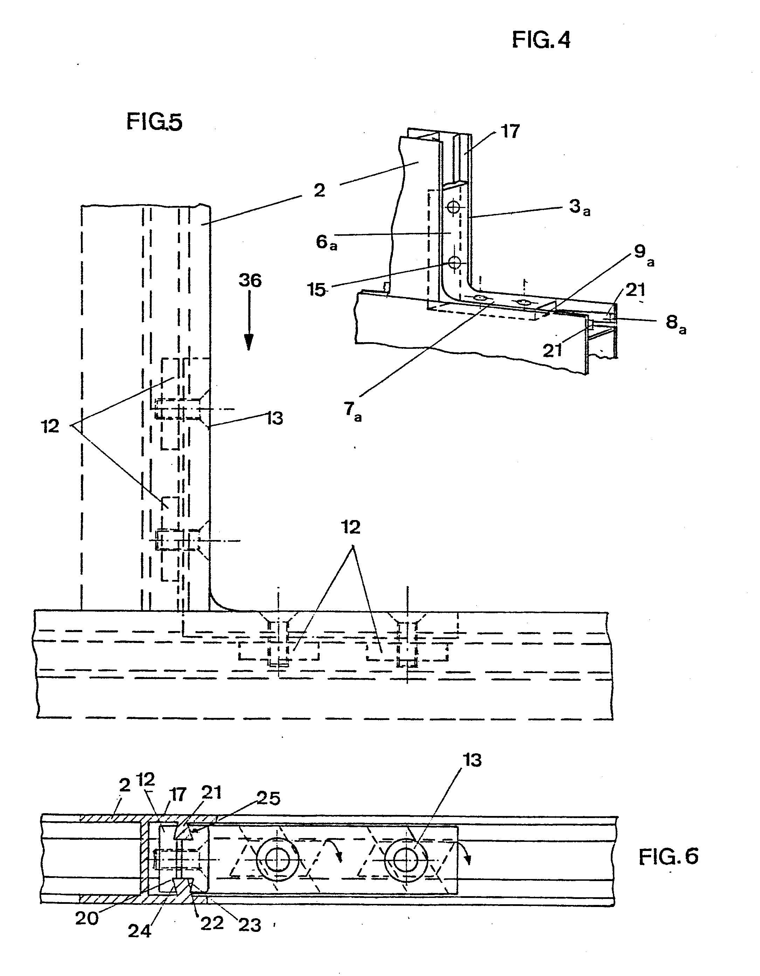

Die Nuten 8 und Federn 9 weisen beidseitig zur Mittelebene
des Profilstabes 2 oder des Eckverbindungsstücks 3 geneigte
Seitenflächen 10 auf. Ausserdem sind die Nuten 8 an beiden
Nutenseiten mit Hinterschneidungen 11 versehen, in welche
als Bestandteil einer Schraubverbindung ein in den Figuren 4 - 6 gezeigtes Klemmstück 12 eingeschwenkt wird. Dieses Klemmstück 12 dient mit seiner Gewindebohrung 14 der Aufnahme einer Schraube 13.

Bei den Eckverbindungsstücken 3a nach den Figuren 4 - 6 fehlen dagegen die Seitenflächen, so dass die Rückenfläche 6a und die Bodenfläche 7a dem Eckverbindungsstück die Form eines einfachen Winkelstücks geben. Dieses liegt in Gebrauchslage versenkt zwischen Flanken 17 der Profilstäbe 2 und greifen mit einer Feder 9a in eine Nut 8a zwischen den Flanken 17 angeformte Rastleisten 21 ein. Querschnittlich gesehen weisen die Rastleisten 21 jeweils eine den Flanken 17 parallele Stirnfläche 22 sowie zu den Flanken 17 hin zusammenlaufende Aussenflächen 23 und Innenflächen 24 auf. Dieser Kante sind auch die Rückenflächen 6a und Bodenflächen 7a des Eckverbindungsstückes 3a angepasst, indem sie mit nach innen vertieften Randsicken 25 versehen sind. An der Innenfläche 24, welche der Hinterschneidung 11 entspricht, schlägt in Gebrauchslage das oben beschriebene Klemmstück 12 an.

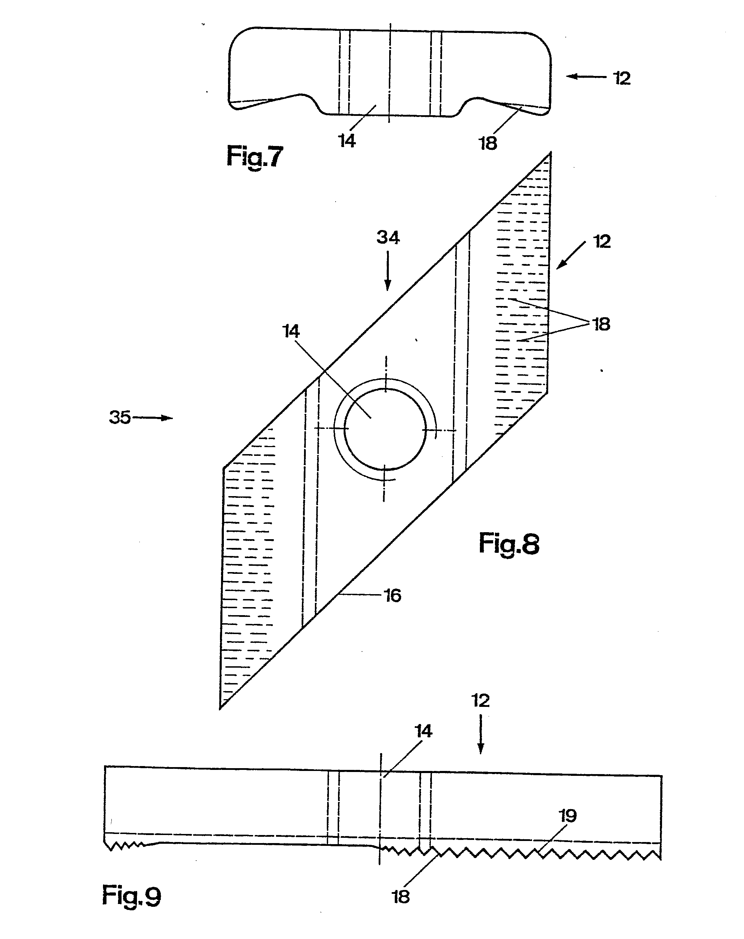

Zur Herstellung einer Klemmschraubverbindung zwischen einem Eckverbindungsstück 3, 3a und einem Spriegel 2 wird durch Bohrungen 15 in der Rückenfläche 6, 6a bzw. Bodenfläche 7, 7a des Eckverbindungsstücks 3, 3a die Schraube 13 hindurchgeführt und anschliessend auf das Klemmstück 12 geschraubt, mit seinen Längsseiten 16 (Fig. 8) parallel zur Kante der Nut 8, 8a gestellt (siehe Fig. 3, 6, gestrichelt dargestellt) und so in die Nut 8, 8a eingeführt. Dann wird das

- 6 -

0136264

Klemmstück 12 in die Hinterschneidung 11 der Nut 8 durch Drehung der Schraube 13 im Uhrzeigersinn eingeschwenkt (Pfeile in Fig. 3, 6) sowie anschliessend durch Anziehen der Schraube 13 das Eckverbindungsstück 3, 3a am Spriegel 2 festgeklemmt bzw. mit diesem fest verbunden, wobei die schräg geneigten Flächen 10 der Nut 8 bzw. der Feder 9 bzw. die Feder 9a, Randsicke 25 und Aussenfläche 23 fest aneinander liegen.

Zur Verbesserung der Klemmwirkung des Klemmstücks 12 weist dieses eine Zahnung 18 auf, wie sie in Fig. 6 besonders deutlich dargestellt ist. Diese Zahnung 18 ist so ausgelegt, dass in die Zahntäler 19 nach dem Einschwenken des Klemmstücks 12 die Ränder 20 (Fig. 1, 6) der Nut 8 eingreifen und so eine mechanisch formschlüssige Verbindung neben der Klemm-/Reibungsverbindung erzeugt wird.

Die Anzahl der Zähne, ihre Abmessung und Querschnittsform variiert je nach Werkstoff und den zu übertragenden Kräften.

0136264

PATENTANSPRUECHE

———————

1. Gerippe für einen Wagenkasten, insbesondere für Strassen- oder Schienenfahrzeuge zur Personen- und Güterbeförderung über vorstehende oder versenkte Eckverbindungsstücke miteinander verbundenen Profilstäben od.dgl., welche Längsnuten mit ggf. an beiden Seiten ihres Querschnitts vorgesehenen Hinterschneidungen aufweisen, in die ein Klemmstück eingesetzt ist, dadurch gekennzeichnet,
dass das Klemmstück (12) mit einer Zahnung (18) versehen ist, mit welcher es beim Festlegen des Eckverbindungsstückes (3) der Nut (8) anliegt.

2. Gerippe nach Anspruch 1, dadurch gekennzeichnet, dass die Zahnung (18) so angeordnet ist, dass sie die Hinterschneidung (11) formschlüssig übergreift.

3. Gerippe nach Anspruch 1 oder 2, dadurch gekennzeichnet, dass das Klemmstück (12) als Parallelogramm ausgebildet und mit einer Gewindebohrung (14) versehen ist.

4. Gerippe nach Anspruch 1 oder 2, dadurch gekennzeichnet, dass das Klemmstück (12) und/oder das Eckverbindungsstück in der Nut (8) durch Schweissen und/oder Kleben festgelegt ist.

5. Gerippe nach einem der Ansprüche 1 - 4, dadurch gekennzeichnet, dass die Zahnung (18) aus einem härteren Werkstoff als das Klemmstück (12) hergestellt und diesem aufgesetzt ist.

1/3    0136264

Fig. 1

Fig. 2

Fig. 3

2/3

0136264

FIG.4

FIG.5

FIG.6

Fig.7

Fig.8

Fig.9